(19) Europäisches Patentamt / European Patent Office / Office européen des brevets

(11) **EP 3 783 762 A1**

(12) **EUROPEAN PATENT APPLICATION**

(43) Date of publication:
24.02.2021 Bulletin 2021/08

(51) Int Cl.:
$H02H \ 1/00^{(2006.01)}$      $H02H \ 7/122^{(2006.01)}$

(21) Application number: **19192739.1**

(22) Date of filing: **21.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MARICI Holdings The Netherlands B.V.**
**3068AX Rotterdam (NL)**

(72) Inventors:
• **Koivula, Ville**
 **00380 Helsinki (FI)**

• **Kokkonen, Jesse**
 **00380 Helsinki (FI)**
• **Macerini, Sauro**
 **52021 Bucine (AR) (IT)**
• **Apeldoorn, Oscar**
 **5300 Turgi (CH)**

(74) Representative: **Kolster Oy Ab**
**(Salmisaarenaukio 1)**
**P.O. Box 204**
**00181 Helsinki (FI)**

Remarks:
Amended claims in accordance with Rule 137(2) EPC.

(54) **METHOD FOR PROTECTING ELECTRICAL NETWORK AGAINST DIRECT CURRENT ARCS, AND INVERTER ASSEMBLY FOR IMPLEMENTING SAID METHOD**

(57) A method for protecting an electrical network against direct current arcs, the electrical network comprising a direct current supply system (DCS), an alternating current system (GRD), and an inverter assembly comprising an input ($DC_{IN}$) connected to the direct current supply system (DCS), an output ($AC_{OUT}$) connected to the alternating current system (GRD), and an inverter (INV) having an inverter bridge. The inverter (INV) is operationally connected between the input ($DC_{IN}$) and the output ($AC_{OUT}$). The method comprises detecting a direct current arc ($ARC_{SE}$ ; $ARC_{PA}$) in the direct current supply system (DCS), and carrying out an arc extinguishing process. The arc extinguishing process comprises controlling the inverter (INV) for changing voltage of the input ($DC_{IN}$) of the inverter assembly.

Fig. 1

EP 3 783 762 A1

## Description

FIELD OF THE INVENTION

The present invention relates to a method and an assembly for protecting an electrical network against direct current arcs.

Two types of direct current arcs can occur in direct current supply systems such as photovoltaic cell systems. The types are known as a parallel arc and a series arc.

Document DE102012104004 discusses recognition of a type of a detected direct current arc. Document US20130335861 A1 discusses extinguishing a direct current arc by means of a separate short circuit switch.

One of the disadvantages associated with the method disclosed in document US20130335861 A1 is that carrying out the method requires a relatively complex electrical assembly.

BRIEF DESCRIPTION OF THE INVENTION

An object of the present invention is to provide a method and an assembly for implementing the method so as to alleviate the above disadvantage. The objects of the invention are achieved by a method and an inverter assembly which are characterized by what is stated in the independent claims. The preferred embodiments of the invention are disclosed in the dependent claims.

The invention is based on the idea of utilizing an inverter connected to a direct current supply system for extinguishing direct current arcs in the direct current supply system. The arc extinguishing process according to the invention comprises controlling the inverter for changing voltage at the input of the inverter assembly including the inverter.

An advantage of the method and inverter assembly of the invention is that no separate short circuit switch is required for extinguishing direct current arcs in the direct current supply system.

BRIEF DESCRIPTION OF THE DRAWINGS

In the following the invention will be described in greater detail by means of preferred embodiments with reference to the attached drawings, in which

Figure 1 shows a circuit diagram of an electrical network comprising an inverter assembly according to an embodiment of the invention; and
Figure 2 shows details of an LC filter connected to the output of the inverter assembly shown in Figure 1.

DETAILED DESCRIPTION OF THE INVENTION

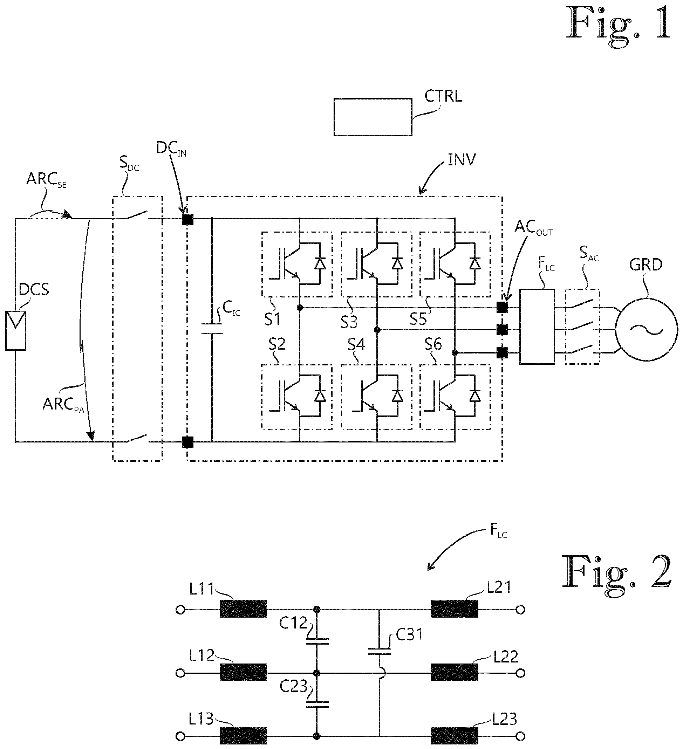

Figure 1 shows an electrical network comprising a direct current supply system DCS, an inverter assembly, an LC filter $F_{LC}$, an alternating current system GRD, a supply switch $S_{DC}$ and a grid switch $S_{AC}$.

The inverter assembly comprises an input $DC_{IN}$ connected to the direct current supply system DCS through the supply switch $S_{DC}$, an output $AC_{OUT}$ connected to the alternating current system GRD through the LC filter $F_{LC}$ and the grid switch $S_{AC}$, an inverter INV operationally connected between the input $DC_{IN}$ and the output $AC_{OUT}$, a control system CTRL, and an intermediate circuit capacitor $C_{IC}$.

The inverter INV has an inverter bridge comprising six controllable switches S1 to S6 in three bridge legs. A first bridge leg comprises series connected controllable switches S1 and S2, a second bridge leg comprises series connected controllable switches S3 and S4, and a third bridge leg comprises series connected controllable switches S5 and S6. Each of the bridge legs is connected in parallel with the input $DC_{IN}$. The intermediate circuit capacitor $C_{IC}$ is operationally connected between positive terminal and negative terminal of the input $DC_{IN}$. The inverter INV is adapted to convert direct current supplied to the inverter INV through the input $DC_{IN}$ into alternating current by means of the inverter bridge, and to supply the alternating current to the output $AC_{OUT}$.

In alternative embodiments, the inverter bridge of the inverter comprises at least one bridge leg, each bridge leg comprising two controllable switches. Herein, expression "inverter bridge" also covers a structure sometimes referred to as a half bridge.

The direct current supply system DCS is a photovoltaic cell system comprising a plurality of photovoltaic cells. In a short circuit condition, current output of the direct current supply system DCS is equal to 200 % of a nominal current thereof. In an alternative embodiment, the direct current supply system is a fuel cell system or a limited current power source of another type whose current output in a short circuit condition is less than or equal to 250 % of a nominal current output of the direct current supply system. The limited current power source enables the inverter to control an output DC voltage of the limited current power source, and the inverter can be designed to withstand the maximum available current from the limited current power source.

The control system CTRL is adapted to detect a direct current arc in the direct current supply system DCS, carry out a recognition process for recognizing the kind of the detected direct current arc, and carry out an arc extinguishing process. The control system CTRL is adapted to detect a direct current arc using a known process for detecting a direct current arc. The recognition process comprises a known process for recognizing the kind of the detected direct current arc.

Contents of the arc extinguishing process depends on results of the recognition process. The arc extinguishing process comprises controlling the inverter bridge for changing voltage of the input $DC_{IN}$ of the inverter assembly.

In normal operating conditions the control system CTRL is adapted to control the inverter bridge with a reference signal adapted to maintain voltage of the input $DC_{IN}$ of the inverter assembly within an operating voltage range. The arc extinguishing process comprises controlling the inverter bridge for changing voltage of the input $DC_{IN}$ of the inverter assembly outside the operating voltage range.

In an embodiment, the operating voltage range is selected for maximum power point tracking for the direct current supply system. Maximum power point tracking (MPPT) technique can be used for a photovoltaic cell system and for a fuel cell system.

A lower limit of the operating voltage range is substantially equal to $\sqrt{2} \cdot U_{GRD}$, where $U_{GRD}$ is a voltage in the alternating current system GRD. An upper limit of the operating voltage range is substantially equal to an open-circuit voltage of the direct current supply system DCS.

When the recognition process carried out by the control system CTRL recognizes the detected direct current arc as a parallel arc $ARC_{PA}$, the arc extinguishing process comprises reducing voltage of the input $DC_{IN}$ of the inverter assembly by controlling the inverter bridge in a short circuit according to a short circuit control scheme. The short circuit control scheme comprises controlling the plurality of bridge legs in short circuit at the same time. In an alternative embodiment, the short circuit control scheme comprises controlling the plurality of bridge legs of the inverter bridge in short circuit in an interleaved manner.

In an alternative embodiment, the inverter comprises a separate boost circuit, and the arc extinguishing process relating to a parallel arc comprises reducing voltage of the input of the inverter assembly by controlling the separate boost circuit into a short circuit. The separate boost circuit includes an inductor, a controllable semiconductor switch and a diode, for example.

In the case of series arc the separate boost circuit can be used to raise the voltage of the direct current supply system to an open circuit voltage of the direct current supply system either by actively controlling the separate boost circuit or by stopping controlling of the separate boost circuit. Herein, stopping controlling of the separate boost circuit is considered as controlling the inverter for changing voltage of the input of the inverter assembly since the separate boost circuit is controlled in a different way than in normal operating conditions. If a topology of the separate boost circuit allows bidirectional power flow, then the voltage of the direct current supply system can be raised above the open circuit voltage of the direct current supply system by taking energy from the intermediate circuit capacitor. In the case there are multiple separate boost circuits each connected to their respective DC sources, the extinguishment process can comprise controlling the separate boost circuits either at the same time or individually (i.e. if the arc detection can recognize a specific DC source to contain the DC arc, then that particular separate boost circuit can be controlled to raise or lower the DC source voltage to extinguish the arc while the other boost converters are unaffected and operate under normal control scheme). If the arc detection cannot recognize the DC arc source to a specific DC source circuit of the parallel connection, the process can comprise operating the boost converters one by one in the arc extinguishing mode until the DC arc in extinguished, after which the operation can continue according to the normal operation mode.

The arc extinguishing process relating to the parallel arc further comprises disconnecting the inverter from the alternating current system GRD and disconnecting the inverter from the direct current supply system DCS. Disconnecting the inverter from the alternating current system GRD is carried out by opening the grid switch $S_{AC}$. Disconnecting the inverter from the direct current supply system DCS is carried out by opening the supply switch $S_{DC}$. After a voltage between positive terminal and negative terminal of the input $DC_{IN}$ has reduced sufficiently, the supply switch $S_{DC}$ is closed in order to short circuit the direct current supply system DCS.

After the AC and DC circuits have been disconnected, the remaining energy at the DC-link of the inverter can be dissipated by a separate load, e.g. auxiliary load relating to auxiliary inverter functions such as semiconductor control circuitry or the like, or the load can be in the form of an additional resistive element. Alternatively, the DC-link energy can be dissipated by creating low ohmic (<10 Ohms) current path between the positive and negative terminals of the DC-link capacitor i.e. short circuiting at least one of the bridge legs. If one bridge leg cannot withstand the current pulse, then plurality of bridge legs can be controlled in short circuit, either simultaneously, or by interleaving, or by controlling the semiconductors only partially conductive (i.e not fully ON). Once the energy stored to the DC-link has dropped below certain threshold value. i.e. monitored by measuring the DC-link voltage which threshold value regards to arc sustaining minimum voltage level (e.g. 100Vdc or below), then the DC switch $S_{DC}$ can be controlled conductive while maintaining the low ohmic state in the bridge leg. This will reduce the DC source voltage to a value below the threshold of sustaining an arc, and the arc is thus extinguished.

In an alternative embodiment the arc extinguishing process relating to the parallel arc does not comprise disconnecting the inverter from the direct current supply system. In a further alternative embodiment, there is no supply switch between the direct current supply system and the input of the inverter assembly. Operating the inverter according to this embodiment requires that the inverter semiconductor bridge can withstand (e.g by terms of $I^2t$-value) the current from both the DC source and the energy stored to the DC-link. Whether the DC switch is opened or not during the extinguishing process can depend on the short circuit current level of the DC source, i.e. in the case of PV array the short circuit current produced depends on the irradiance received by the PV array panels, if the irradiance is low, there might not be need to open the DC switch at all, the irradiance can be estimated by monitoring the PV array power (current) at the time of the arc detection, for example.

When the recognition process recognizes the detected direct current arc as a series arc $ARC_{SE}$, the arc extinguishing process comprises raising voltage of the input $DC_{IN}$ of the inverter assembly by controlling the inverter bridge according to a voltage raising control scheme. The voltage raising control scheme is adapted to raise voltage of the input $DC_{IN}$ of the inverter assembly by utilizing the LC filter $F_{LC}$.

The LC filter $F_{LC}$ comprises three capacitors C12, C23 and C31, and six inductors L11, L12, L13, L21, L22 and L23. LC filters are well known in the art, and therefore they are not discussed in detail herein.

The voltage raising control scheme is adapted to raise voltage of the input $DC_{IN}$ of the inverter assembly to a series arc extinguishing voltage value that is higher than an open circuit voltage of the direct current supply system DCS. In an alternative embodiment, the series arc extinguishing voltage value is substantially equal to the open circuit voltage of the direct current supply system. In further alternative embodiments, the series arc extinguishing voltage value $V_{SAEV}$ is in the range

$$V_{OCV} - 20V \leq V_{SAEV} \leq V_{OCV} + 20V,$$

wherein Vocv is the open circuit voltage of the direct current supply system.

When the recognition process is inconclusive, the arc extinguishing process first comprises raising voltage of the input $DC_{IN}$ of the inverter assembly by controlling the inverter bridge according to a voltage raising control scheme, and subsequent determining whether a direct current arc is present in the direct current supply system DCS. If a direct current arc is not detected any more in the direct current supply system DCS, the control system CTRL continues a normal operation of the inverter assembly. If subsequent to raising voltage of the input $DC_{IN}$ of the inverter assembly, a direct current arc is still detected in the direct current supply system DCS, the arc extinguishing process reduces voltage of the input $DC_{IN}$ of the inverter assembly by controlling the inverter bridge in a short circuit according to a short circuit control scheme. In other words, when the recognition process is inconclusive, the arc extinguishing process first carries out measures for extinguishing a series arc, and subsequently carries out measures for extinguishing a parallel arc, if the measures for extinguishing a series arc did not eliminate the detected electric arc.

Herein, an inconclusive recognition process refers to a situation where the recognition process cannot conclude whether there is a series arc or a parallel arc present in the electrical network. A recognition process can be inconclusive for example in situation where there are both a series arc and a parallel arc present in the electrical network. Above described arc extinguishing process is capable of extinguishing multiple simultaneous electric arcs having different types.

In an embodiment, a type of the direct current arc is recognized based on how the direct current arc reacts to the raising of voltage at the input of the inverter assembly. If intensity of the direct current arc increase due to the raising of the voltage, the direct current arc is recognized as a parallel arc.

In an embodiment, a method for protecting an electrical network against direct current arcs does not comprise carrying out a separate recognition process for recognizing the kind of the detected direct current arc. Instead, the method comprises carrying out an arc extinguishing process described above in which the arc extinguishing process first carries out measures for extinguishing a series arc, and subsequently carries out measures for extinguishing a parallel arc, if the measures for extinguishing a series arc do not eliminate the detected electric arc.

It will be obvious to a person skilled in the art that the inventive concept can be implemented in various ways. The invention and its embodiments are not limited to the examples described above but may vary within the scope of the claims.

## Claims

1. A method for protecting an electrical network against direct current arcs, the electrical network comprising:

   a direct current supply system (DCS);
   an alternating current system (GRD); and
   an inverter assembly comprising an input ($DC_{IN}$) connected to the direct current supply system (DCS), an output ($AC_{OUT}$) connected to the alternating current system (GRD), and an inverter (INV) having an inverter bridge comprising at least one bridge leg, each bridge leg comprising two controllable switches (S1 - S6), the inverter (INV) being operationally connected between the input ($DC_{IN}$) and the output ($AC_{OUT}$), and adapted to convert direct current supplied to the inverter (INV) through the input ($DC_{IN}$) into alternating current, and to supply the alternating current to the output ($AC_{OUT}$);
   the method comprising:

   detecting a direct current arc ($ARC_{SE}$; $ARC_{PA}$) in the direct current supply system (DCS); and
   carrying out an arc extinguishing process, **characterized in that** the arc extinguishing process comprises controlling the inverter (INV) for changing voltage of the input ($DC_{IN}$) of the inverter assembly.

**2.** A method according to claim 1, **characterized in that** the direct current supply system (DCS) is a limited current power source whose current output in a short circuit condition is less than or equal to 250 % of a nominal current output of the direct current supply system (DCS).

**3.** A method according to claim 1 or 2, **characterized in that** the method comprises carrying out a recognition process for recognizing the kind of the detected direct current arc ($ARC_{SE}$ ; $ARC_{PA}$), and contents of the arc extinguishing process depends on results of the recognition process.

**4.** A method according to claim 3, **characterized in that** when the recognition process recognizes the detected direct current arc as a parallel arc ($ARC_{PA}$), the arc extinguishing process comprises reducing voltage of the input ($DC_{IN}$) of the inverter assembly by controlling the inverter (INV) in a short circuit according to a short circuit control scheme.

**5.** A method according to claim 4, **characterized in that** the arc extinguishing process comprises disconnecting the inverter (INV) from the alternating current system (GRD).

**6.** A method according to claim 4 or 5, **characterized in that** the arc extinguishing process comprises disconnecting the inverter (INV) from the direct current supply system (DCS).

**7.** A method according to claim 3, **characterized in that** when the recognition process recognizes the detected direct current arc as a series arc ($ARC_{SE}$), the arc extinguishing process comprises raising voltage of the input ($DC_{IN}$) of the inverter assembly by controlling the inverter (INV) according to a voltage raising control scheme.

**8.** A method according to claim 7, **characterized in that** the electrical network comprises an LC filter ($F_{LC}$) connected to the output ($AC_{OUT}$) of the inverter assembly, and the voltage raising control scheme is adapted to raise voltage of the input ($DC_{IN}$) of the inverter assembly by utilizing the LC filter ($F_{LC}$).

**9.** A method according to claim 7 or 8, **characterized in that** the voltage raising control scheme is adapted to raise voltage of the input ($DC_{IN}$) of the inverter assembly to a series arc extinguishing voltage value that is substantially equal to or higher than an open circuit voltage of the direct current supply system (DCS).

**10.** A method according to claim 9, **characterized in that** the series arc extinguishing voltage value is in the range

$$V_{OCV} - 20V \leq V_{SAEV} \leq V_{OCV} + 20V,$$

wherein

$V_{SAEV}$ is the series arc extinguishing voltage value; and
Vocv is the open circuit voltage of the direct current supply system.

**11.** A method according to claim 1 or 2, **characterized in that** the arc extinguishing process comprises:

raising voltage of the input ($DC_{IN}$) of the inverter assembly by controlling the inverter (INV) according to a voltage raising control scheme; subsequent to raising voltage of the input ($DC_{IN}$) of the inverter assembly by means of the voltage raising control scheme, determining whether a direct current arc ($ARC_{SE}$ ; $ARC_{PA}$) is present in the direct current supply system (DCS); continuing a normal operation of the inverter assembly if subsequent to raising voltage of the input ($DC_{IN}$) of the inverter assembly by means of the voltage raising control scheme, a direct current arc ($ARC_{SE}$ ; $ARC_{PA}$) is not detected in the direct current supply system (DCS); and reducing voltage of the input ($DC_{IN}$) of the inverter assembly by controlling the inverter (INV) in a short circuit according to a short circuit control scheme if subsequent to raising voltage of the input ($DC_{IN}$) of the inverter assembly by means of the voltage raising control scheme, a direct current arc is still detected in the direct current supply system (DCS).

**12.** A method according to claim 3, **characterized in that** when the recognition process is inconclusive, the arc extinguishing process comprises:

raising voltage of the input ($DC_{IN}$) of the inverter assembly by controlling the inverter (INV) according to a voltage raising control scheme; subsequent to raising voltage of the input ($DC_{IN}$) of the inverter assembly by means of the voltage raising control scheme, determining whether a direct current arc ($ARC_{SE}$ ; $ARC_{PA}$) is present in the direct current supply system (DCS); continuing a normal operation of the inverter assembly if subsequent to raising voltage of the input ($DC_{IN}$) of the inverter assembly by means of the voltage raising control scheme, a direct current arc ($ARC_{SE}$ ; $ARC_{PA}$) is not detected in the direct current supply system (DCS); and reducing voltage of the input ($DC_{IN}$) of the inverter assembly by controlling the inverter (INV) in a short circuit according to a short circuit control scheme if subsequent to raising voltage of the input ($DC_{IN}$) of the inverter assembly by means of the voltage raising control scheme, a direct current arc is still detected in the direct current supply system (DCS).

**13.** An inverter assembly comprising:

an input ($DC_{IN}$) adapted to be connected to a direct current supply system (DCS);
an output ($AC_{OUT}$) adapted to be connected to an alternating current system (GRD);
an inverter (INV) having an inverter bridge comprising at least one bridge leg, each bridge leg comprising two controllable switches (S1 - S6), the inverter (INV) being operationally connected between the input ($DC_{IN}$) and the output ($AC_{OUT}$), and adapted to convert direct current supplied to the inverter (INV) through the input ($DC_{IN}$) into alternating current, and to supply the alternating current to the output ($AC_{OUT}$); and
a control system (CTRL) adapted to:

detect a direct current arc ($ARC_{SE}$ ; $ARC_{PA}$) in the direct current supply system (DCS); and
carry out an arc extinguishing process, **characterized in that** the arc extinguishing process comprises controlling the inverter (INV) for changing voltage of the input ($DC_{IN}$) of the inverter assembly.

**14.** An inverter assembly according to claim 13, **characterized in that** in normal operating conditions the control system (CTRL) is adapted to control the inverter (INV) with a reference signal adapted to maintain voltage of the input ($DC_{IN}$) of the inverter assembly within an operating voltage range, wherein the arc extinguishing process comprises controlling the inverter (INV) for changing voltage of the input ($DC_{IN}$) of the inverter assembly outside the operating voltage range.

**15.** An inverter assembly according to claim 14, **characterized in that** a lower limit of the operating voltage range is substantially equal to $\sqrt{2} \cdot U_{GRD}$, where $U_{GRD}$ is a voltage in the alternating current system (GRD), and an upper limit of the operating voltage range is substantially equal to an open-circuit voltage of the direct current supply system (DCS).

**Amended claims in accordance with Rule 137(2) EPC.**

**1.** A method for protecting an electrical network against direct current arcs, the electrical network comprising:

a direct current supply system (DCS);
an alternating current system (GRD); and
an inverter assembly comprising an input ($DC_{IN}$) connected to the direct current supply system (DCS), an output ($AC_{OUT}$) connected to the alternating current system (GRD), and an inverter (INV) having an inverter bridge comprising at least one bridge leg, each bridge leg comprising two controllable switches (S1 - S6), the inverter (INV) being operationally connected between the input ($DC_{IN}$) and the output ($AC_{OUT}$), and adapted to convert direct current supplied to the inverter (INV) through the input ($DC_{IN}$) into alternating current, and to supply the alternating current to the output ($AC_{OUT}$);
the method comprising:

detecting a direct current arc ($ARC_{SE}$ ; $ARC_{PA}$) in the direct current supply system (DCS); and
carrying out an arc extinguishing process,

**characterized in that** the arc extinguishing process comprises controlling the inverter bridge of the inverter (INV) for changing voltage of the input ($DC_{IN}$) of the inverter assembly, wherein the arc extinguishing process comprises:

raising voltage of the input ($DC_{IN}$) of the inverter assembly by controlling the inverter bridge of the inverter (INV) according to a voltage raising control scheme;
subsequent to raising voltage of the input ($DC_{IN}$) of the inverter assembly by means of the voltage raising control scheme, determining whether a direct current arc ($ARC_{SE}$ ; $ARC_{PA}$) is present in the direct current supply system (DCS);
continuing a normal operation of the inverter assembly if subsequent to raising voltage of the input ($DC_{IN}$) of the inverter assembly by means of the voltage raising control scheme, a direct current arc ($ARC_{SE}$ ; $ARC_{PA}$) is not detected in the direct current supply system (DCS); and
reducing voltage of the input ($DC_{IN}$) of the inverter assembly by controlling the inverter bridge of the inverter (INV) in a short circuit according to a short circuit control scheme if subsequent to raising voltage of the input ($DC_{IN}$) of the inverter assembly by means of the voltage raising control scheme, a direct current arc is still detected in the direct current supply system (DCS).

**2.** A method according to claim 1, **characterized in that** the direct current supply system (DCS) is a limited current power source whose current output in a short circuit condition is less than or equal to 250 % of a nominal current output of the direct current supply system (DCS).

**3.** A method according to claim 1 or 2, **characterized in that** the method comprises carrying out a recognition process for recognizing the kind of the detected direct current arc ($ARC_{SE}$ ; $ARC_{PA}$), and contents of the arc extinguishing process depends on results of the recognition process.

**4.** A method according to claim 3, **characterized in that** when the recognition process recognizes the detected direct current arc as a parallel arc ($ARC_{PA}$), the arc extinguishing process comprises reducing voltage of the input ($DC_{IN}$) of the inverter assembly by controlling the inverter bridge of the inverter (INV) in a short circuit according to a short circuit control scheme.

**5.** A method according to claim 4, **characterized in that** the electrical network comprises a grid switch ($S_{AC}$) such that the output ($AC_{OUT}$) is connected to the alternating current system (GRD) through the grid switch ($S_{AC}$), wherein the arc extinguishing process comprises disconnecting the inverter (INV) from the alternating current system (GRD) by opening the grid switch ($S_{AC}$).

**6.** A method according to claim 4 or 5, **characterized in that** the electrical network comprises a supply switch ($S_{DC}$) such that the input ($DC_{IN}$) is connected to the direct current supply system (DCS) through the supply switch ($S_{DC}$), wherein the arc extinguishing process comprises disconnecting the inverter (INV) from the direct current supply system (DCS) by opening the supply switch ($S_{DC}$).

**7.** A method according to claim 3, **characterized in that** when the recognition process recognizes the detected direct current arc as a series arc ($ARC_{SE}$), the arc extinguishing process comprises raising voltage of the input ($DC_{IN}$) of the inverter assembly by controlling the inverter (INV) according to a voltage raising control scheme.

**8.** A method according to claim 7, **characterized in that** the electrical network comprises an LC filter ($F_{LC}$) connected to the output ($AC_{OUT}$) of the inverter assembly, and the voltage raising control scheme is adapted to raise voltage of the input ($DC_{IN}$) of the inverter assembly by utilizing the LC filter ($F_{LC}$) such that the voltage of the input ($DC_{IN}$) of the inverter assembly is raised by cooperation between the inverter bridge of the inverter (INV) and the LC filter ($F_{LC}$).

**9.** A method according to claim 7 or 8, **characterized in that** the voltage raising control scheme is adapted to raise voltage of the input ($DC_{IN}$) of the inverter assembly to a series arc extinguishing voltage value that is substantially equal to or higher than an open circuit voltage of the direct current supply system (DCS).

**10.** A method according to claim 9, **characterized in that** the series arc extinguishing voltage value is in the range

$$V_{OCV} - 20V \leq V_{SAEV} \leq V_{OCV} + 20V,$$

wherein $V_{SAEV}$ is the series arc extinguishing voltage value; and
$V_{OCV}$ is the open circuit voltage of the direct current supply system.

**11.** A method for protecting an electrical network against direct current arcs, the electrical network comprising:

a direct current supply system (DCS);
an alternating current system (GRD); and
an inverter assembly comprising an input ($DC_{IN}$) connected to the direct current supply system (DCS), an output ($AC_{OUT}$) connected to the alternating current system (GRD), and an inverter (INV) having an inverter bridge comprising at least one bridge leg, each bridge leg comprising two controllable switches (S1- S6), the inverter (INV) being operationally connected between the input ($DC_{IN}$) and the output ($AC_{OUT}$), and adapted to convert direct current supplied to the inverter (INV) through the input ($DC_{IN}$) into alternating current, and to supply the alternating current to the output ($AC_{OUT}$);
the method comprising:

detecting a direct current arc ($ARC_{SE}$ ; $ARC_{PA}$) in the direct current supply system (DCS); and
carrying out an arc extinguishing process,

**characterized in that** the arc extinguishing process comprises controlling the inverter bridge of the inverter (INV) for changing voltage of the input ($DC_{IN}$) of the inverter assembly,
wherein the method comprises carrying out a recognition process for recognizing the kind of the detected direct current arc ($ARC_{SE}$ ; $ARC_{PA}$), and contents of the arc extinguishing process depends on results of the recognition process such that when the recognition process is inconclusive, the arc extinguishing process comprises:

raising voltage of the input ($DC_{IN}$) of the inverter assembly by controlling the inverter (INV) according to a voltage raising control scheme;

subsequent to raising voltage of the input ($DC_{IN}$) of the inverter assembly by means of the voltage raising control scheme, determining whether a direct current arc ($ARC_{SE}$ ; $ARC_{PA}$) is present in the direct current supply system (DCS);

continuing a normal operation of the inverter assembly if subsequent to raising voltage of the input ($DC_{IN}$) of the inverter assembly by means of the voltage raising control scheme, a direct current arc ($ARC_{SE}$ ; $ARC_{PA}$) is not detected in the direct current supply system (DCS); and

reducing voltage of the input ($DC_{IN}$) of the inverter assembly by controlling the inverter (INV) in a short circuit according to a short circuit control scheme if subsequent to raising voltage of the input ($DC_{IN}$) of the inverter assembly by means of the voltage raising control scheme, a direct current arc is still detected in the direct current supply system (DCS).

12. An inverter assembly comprising:

an input ($DC_{IN}$) adapted to be connected to a direct current supply system (DCS);

an output ($AC_{OUT}$) adapted to be connected to an alternating current system (GRD);

an inverter (INV) having an inverter bridge comprising at least one bridge leg, each bridge leg comprising two controllable switches (S1 - S6), the inverter (INV) being operationally connected between the input ($DC_{IN}$) and the output ($AC_{OUT}$), and adapted to convert direct current supplied to the inverter (INV) through the input ($DC_{IN}$) into alternating current, and to supply the alternating current to the output ($AC_{OUT}$); and

a control system (CTRL) adapted to:

detect a direct current arc ($ARC_{SE}$ ; $ARC_{PA}$) in the direct current supply system (DCS); and

carry out an arc extinguishing process,

**characterized in that** the arc extinguishing process comprises controlling the inverter bridge of the inverter (INV) for changing voltage of the input ($DC_{IN}$) of the inverter assembly, wherein the arc extinguishing process comprises:

raising voltage of the input ($DC_{IN}$) of the inverter assembly by controlling the inverter bridge of the inverter (INV) according to a voltage raising control scheme;

subsequent to raising voltage of the input ($DC_{IN}$) of the inverter assembly by means of the voltage raising control scheme, determining whether a direct current arc ($ARC_{SE}$ ; $ARC_{PA}$) is present in the direct current supply system (DCS);

continuing a normal operation of the inverter assembly if subsequent to raising voltage of the input ($DC_{IN}$) of the inverter assembly by means of the voltage raising control scheme, a direct current arc ($ARC_{SE}$ ; $ARC_{PA}$) is not detected in the direct current supply system (DCS); and

reducing voltage of the input ($DC_{IN}$) of the inverter assembly by controlling the inverter bridge of the inverter (INV) in a short circuit according to a short circuit control scheme if subsequent to raising voltage of the input ($DC_{IN}$) of the inverter assembly by means of the voltage raising control scheme, a direct current arc is still detected in the direct current supply system (DCS).

13. An inverter assembly according to claim 12, **characterized in that** in normal operating conditions the control system (CTRL) is adapted to control the inverter (INV) with a reference signal adapted to maintain voltage of the input ($DC_{IN}$) of the inverter assembly within an operating voltage range, wherein the arc extinguishing process comprises controlling the inverter (INV) for changing voltage of the input ($DC_{IN}$) of the inverter assembly outside the operating voltage range.

14. An inverter assembly according to claim 13, **characterized in that** a lower limit of the operating voltage range is substantially equal to $\sqrt{2} \cdot U_{GRD}$, where $U_{GRD}$ is a voltage in the alternating current system (GRD), and an upper limit of the operating voltage range is substantially equal to an open-circuit voltage of the direct current supply system (DCS).

# Fig. 1

# Fig. 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | JP 2016 157364 A (KYOCERA CORP)<br>1 September 2016 (2016-09-01)<br>* paragraphs [0003] - [0010], [0016] - [0038] * | 1-4,9,<br>11-15<br>8 | INV.<br>H02H1/00<br>H02H7/122 |
| X<br><br><br>A | EP 2 960 947 A1 (SOLANTRO SEMICONDUCTOR CORP [CA]) 30 December 2015 (2015-12-30)<br>* abstract; figures 9,10 * | 1-7,<br>9-11,13,<br>15<br>8 | |
| X<br><br>A | DE 10 2011 008140 A1 (ELLENBERGER & POENSGEN [DE]) 1 March 2012 (2012-03-01)<br>* abstract; figures 1,2 *<br>* paragraphs [0001], [0005], [0006], [0009] - [0017] * | 1-7,9-15<br><br>8 | |

| | TECHNICAL FIELDS SEARCHED (IPC) |
|---|---|
| | H02H |

The present search report has been drawn up for all claims

| Place of search | Date of completion of the search | Examiner |
|---|---|---|
| Munich | 2 March 2020 | Palukova, Mila |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 19 2739

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2020

| Patent document cited in search report | | Publication date | Patent family member(s) | | Publication date |
|---|---|---|---|---|---|
| JP 2016157364 | A | 01-09-2016 | NONE | | |
| EP 2960947 | A1 | 30-12-2015 | CA | 2895545 A1 | 26-12-2015 |
| | | | EP | 2960947 A1 | 30-12-2015 |
| | | | US | 2015381111 A1 | 31-12-2015 |
| DE 102011008140 | A1 | 01-03-2012 | AU | 2011297965 A1 | 07-02-2013 |
| | | | BR | 112013004770 A2 | 09-08-2016 |
| | | | CA | 2809895 A1 | 08-03-2012 |
| | | | CN | 103155325 A | 12-06-2013 |
| | | | DE | 102011008140 A1 | 01-03-2012 |
| | | | DE | 202011110757 U1 | 23-02-2016 |
| | | | EP | 2612410 A1 | 10-07-2013 |
| | | | ES | 2572741 T3 | 02-06-2016 |
| | | | IL | 223840 A | 21-04-2016 |
| | | | JP | 5530566 B2 | 25-06-2014 |
| | | | JP | 2013542699 A | 21-11-2013 |
| | | | KR | 20130081697 A | 17-07-2013 |
| | | | SG | 187202 A1 | 28-02-2013 |
| | | | TN | 2012000626 A1 | 01-04-2014 |
| | | | US | 2013170084 A1 | 04-07-2013 |
| | | | WO | 2012028247 A1 | 08-03-2012 |
| | | | ZA | 201208079 B | 26-06-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102012104004

- US 20130335861 A1